# EUROPEAN PATENT SPECIFICATION

(11) **EP 3 825 176 B1**
(45) Date of publication and mention of the grant of the patent: **22.04.2026**
(21) Application number: 19210756.3
(22) Date of filing: 21.11.2019
(51) Int. Cl.: B60N 2/00, B60N 2/01, B60N 2/42, B60N 2/427, B60R 21/04

(54) **REARWARD-FACING SEAT WITH SAFETY REINFORCEMENT**
NACH HINTEN GERICHTETER SITZ MIT SICHERHEITSVERSTÄRKUNG
SIÈGE ORIENTÉ VERS L'ARRIÈRE COMPORTANT UN RENFORT DE SÉCURITÉ

(43) Date of publication of application: 26.05.2021
(73) Proprietor: Volvo Car Corporation, 40531 Göteborg (SE)
(72) Inventor: Sandborg, Erik, 417 53 Göteborg (SE); Björklund, Magnus Vilhelm, 423 49 Torslanda (SE); Nilsson, Richard, 417 29 Göteborg (SE)
(74) Representative: Nederlandsch Octrooibureau

(56) References cited:
- EP-A1- 3 428 018
- EP-A1- 3 640 093
- WO-A1-2019/168883
- JP-A- 2008 222 154
- JP-U- S58 108 941
- US-A1- 2019 111 880
- US-B1- 6 474 684

## Description

### Technical field

The invention relates to a safety configuration for vehicles with rearward-facing seats.

The invention also relates to a vehicle with a rearward-facing seat with a safety device; and a method of safety-reinforcement for a rearward-facing seat.

### Background

New car designs involve rearward-facing seating configurations. Such configurations result in new forces for the car and occupants, particularly in relation to an accident with sudden large forces. Some past car designs included seats which could pivot to face forward or rearward, and had some safety devices associated with protecting a passenger in a turnable seat. These were typically either a cushion positioned at the back of the turnable seat or an inflatable device connected to the seat that extends to the sides and possibly above the person to restrain the passenger in the reversible seat in the event of a collision. EP 3 428 018 A1 shows an example of a rearward-facing seat according to the prior art.

### Summary

It is an object of the invention to provide a safety configuration for rearward-facing seats in vehicles. Past systems with rearward-facing seats were related to reversible seating. Due to that, any safety configurations were typically limited and had to be connected to the seat itself for use in forward facing positions or rearward-facing configuration. Additionally, rearward-facing seat configurations result in high forces for occupants in frontal impact collision, forces which are significantly higher than rearward impacts. Past safety solutions for rear impact collisions are not sufficient for frontal impact forces, and are not adaptive to different passengers and/or crash conditions. Thus, there is a need for safety solutions for rearward-facing seat configurations in a frontal impact situation, and particularly for safety solutions which can adapt to the passenger and/or crash conditions

The invention is defined by the technical features and method step set forth in independent product claim 1 and independent method claim 12, respectively. Such a configuration ensures that the rearward-facing seat occupant is protected by the adaptive damping device. The placement behind an upper portion of the back of the seat helps to cushion the torso, neck and head from strong forces in a collision, which can be especially useful for protection of an occupant of a rearward-facing seat in a frontal collision. Frontal collisions subject the vehicle and thus the occupants to large forces due to the sudden deceleration, and thus the rearward-facing seat with adaptive damping device can protect an occupant in such a situation.

According to an embodiment, the adaptive damping device is an inflatable airbag. Optionally, the inflatable airbag comprises ventilation holes. An inflatable airbag can be supplied with gas through a connected adaptive gas generator. The inflatable airbag can be inflated to different levels to adapt to different occupant and/or collision conditions. This can be through the supply of gas to the airbag and/or through the ventilation holes.

According to the invention, the adaptive damping device is connected to an upper portion of the back of the seat behind the seat or the adaptive damping device is located within the seat, at least in an undeployed condition. Connecting to the seat itself or locating within the seat can ensure that the airbag is properly positioned for providing damping for the occupant no matter the collision or damage to the vehicle resulting from the collision. Additionally, connection directly to the seat can ensure a compact package that could be manufactured at a different location and simply inserted into a vehicle, even allowing for the adapting of vehicles which previously only had forward facing seats to now include rearward-facing seats with adaptable safety devices. In embodiments, a gas generator can also be connected to or within the seat.

According to an embodiment which is not part of the invention, the adaptive damping device is connected to a vehicle structure. This could be any part of the vehicle structure or frame, for example an cross car beam, upper dash and/or cowl. Such a configuration would give the adaptive damping device a configuration to secure to the vehicle and provide damping forces for occupant safety.

According to an embodiment, the seat further comprises a head rest connected to the back. Optionally, the adaptive damping device extends at least partially behind the head rest. This can be to the top of the head rest or at least partially up the headrest toward the top. Such a configuration can help to protect an occupant of seat from injuries to the head, torso, neck and brain in the event of a collision. Optionally, the seatback and/or headrest geometry can be designed for airbag interaction, shaped such that the airbag can achieve the best possible performance for damping and reinforcing the seatback (and headrest) in the event of a collision.

According to the invention, the adaptive damping device adapts based on one or more of crash severity and occupant size, and according to a preferred embodiment, the adaptive device adapts based on one or more of crash conditions and occupant position. This can be related to one or more of the direction of the crash, e.g., frontal, rear or side crash; to the severity of the crash, e.g., sudden accelerations or decelerations; the position of the occupant in the seat; and the occupant's height and/or weight. Such information can be provided to the adaptive damping device by one or more sensors located in the seat or elsewhere in the vehicle. Such sensors can be one or more of crash or impact sensors, acceleration/deceleration sensors, safety sensors to measure the severity of an impact, occupant weight or height sensors; occupant position sensors (e.g., a camera or sensor on the safety belt to know whether applicant is sitting back in the seat), etc. Such sensors can send information or signals to the adaptive damping device which will cause the device to appropriate adjust the damping level according to the information sent.

According to an embodiment, the adaptive damping device comprises an adaptive gas generator to regulate the mass flow to the damping device. This allows for achieving the right pressure in airbag according to information or signals related to crash severity, crash conditions, occupant position and/or occupant size.

According to a further aspect of the invention, a vehicle includes a rearward-facing seat with the adaptive damping device. Such a configuration of a vehicle can ensure that an occupant in the rearward-facing seat is protected in the event of a collision, even in the face of strong forces, for example, from a frontal collision.

According to an embodiment, the method further comprises providing one or more sensors to provide signals or information for the adaptive damping device to adapt according to one or more of crash severity, crash conditions, occupant position and occupant size. Such an adaptive safety system is able to provide safety for a variety of different occupants in a variety of crash conditions.

### Brief description of the drawings

It is an object of the invention to provide a safety configuration for a rearward-facing seat.
Figure 1 shows a schematic view of an example configuration of the seating in a vehicle with rearward-facing seats.
Figure 2A shows a side view of a first embodiment, which is not part of the invention, of a rearward-facing seat with adaptive damping device and an occupant in the seat;
Figure 2B shows a top view of Fig. 2A.
Figure 3A shows a second embodiment, according to the invention, of a rearward-facing seat with adaptive damping device;
Figure 3B shows a cross-sectional side view of part of Fig. 3A; and
Figure 4 shows a third embodiment, which is not part of the invention, of a rearward-facing seat with adaptive damping device.

### Detailed Description

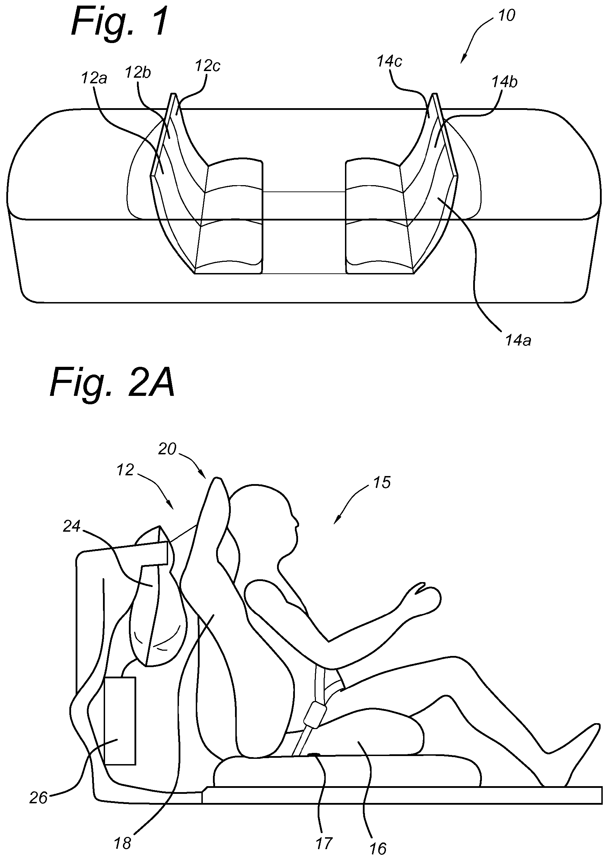

Figure 1 shows a schematic view of an example configuration of the seating in a vehicle 10 with rearward-facing seats. Such a configuration is sometimes called campfire seating, where the seats are faced toward a center or center line of the vehicle and seat occupants of rearward-facing seats face toward seat occupants of forward facing seats.

Seats 12a, 12b, 12c face rearward and seats 14a, 14b, 14c face in a forward direction in the vehicle. Such a seating configuration is typical for a self-driving or autonomous vehicle as no space is needed for a driver facing forward, as well as space for the typical driving devices (steering wheel, pedals, etc.).

Most past safety devices and safety configurations have been designed and arranged to protect passengers in forward facing seats. However, such vehicles with rearward-facing seats have different safety considerations than vehicles with only forward facing seating. The forces acting on the passengers in the rearward-facing seats 12a, 12b, 12c are quite different in the event of a collision, and thus new safety configurations are required.

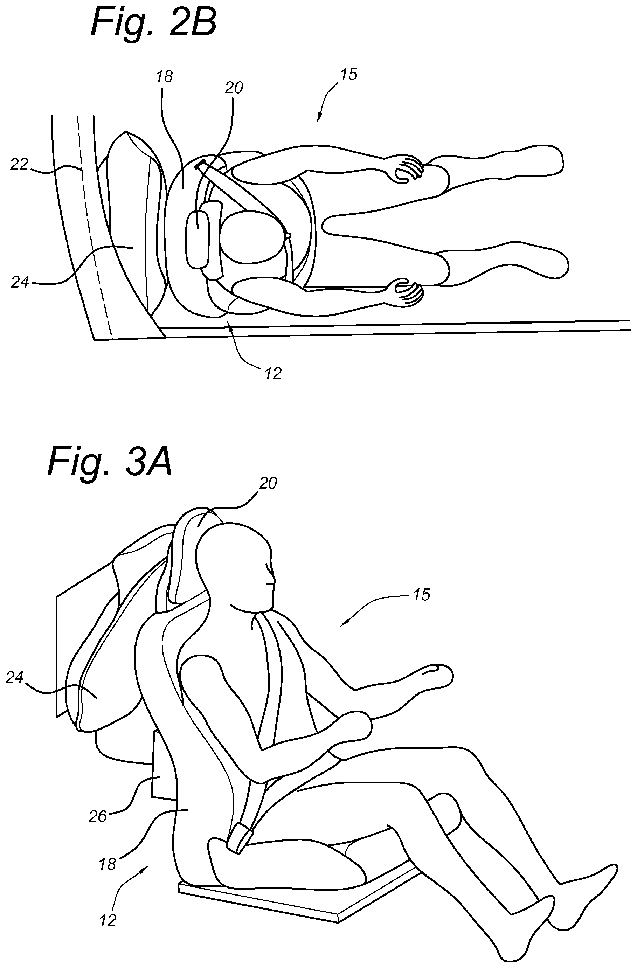

Figure 2A shows a side view of a first embodiment, which is not part of the invention, of a rearward-facing seat 12 with an adaptive damping device for protecting an occupant 15 in the rearward-facing seat 12 in the event of a collision, and Fig. 2B shows a top view of Fig. 2A.

Seat 12 includes base 16 with sensor 17, back 28 and headrest 20. Back 18 is connected to base and extends from base 16 to headrest 20. Headrest 20 can be an extension of back 18 or could be a separate part that can, for example, extend up and down with respect to back 18 to align with the head of occupant 15.

Adaptive damping device includes inflatable airbag 24 with adaptable gas generator 26 to supply gas to airbag 24. Airbag 24 can include ventilation holes. Airbag 24 sits behind an upper portion of the back 18 of seat 12 and partially behind headrest 20. In this embodiment, airbag 24 is secured to vehicle 10 body, for example, a cross car beam 22, a beam which typically connects A-pillars in a vehicle and contributes to the lateral and torsional stiffness. In other embodiments, which are not part of the invention, the airbag 24 could secure to the cowl and/or upper dash, though could also be other structural parts of the vehicle.

In the event of a collision or other initiation event, gas generator 26 provides gas to airbag 24, inflating airbag to act as a back and possible head cushioning, damping forces acting on occupant 15. Airbag 24 inflates and at least partially fills the space between an upper portion of seat back 18 and the vehicle 10 frame.

Adaptive damping device can adjust the level of inflation of airbag 24 through the volume of gas provided by adaptable gas generator 26 and/or ventilation holes in airbag 24. The adaptation of airbag 24 can be in relation to one or more of crash severity; crash condition, e.g., frontal, rear or side collision; occupant position; and occupant size. One or more sensors can send information or signals to adaptive damping device in relation to one or more of these adaptation conditions. For example, vehicle 10 can include one or more sensors that sense a collision is likely or imminent, a sudden acceleration or deceleration of the vehicle; a location of likely impact on the vehicle in a collision; the position of the occupant in the seat; a height of an occupant in the seat; a weight of an occupant, etc. The one or more sensors could be located near or in seat 12 or at other locations in or on the outside of the vehicle, e.g., frontal and rear sensors to sense approaching objects, acceleration or braking sensors to sense sudden acceleration or deceleration.

For example, sensor 17 can determine the weight of occupant 15, and thereby estimate the size of occupant 15. This information can be sent to adaptable gas generator 26 to determine the proper level of inflation of airbag 24 for occupant 15. For example, a larger occupant may require a higher level of cushioning in a crash and therefore generator 26 would provide more inflation for airbag 24 in the event of a collision, whereas a smaller occupant (e.g., a child) may require less inflation provided by gas generator 26 to airbag 24. Such adaptability could further be used to adjust the location and/or rate of inflation as well as levels of inflation in airbag 24.

A crash sensor located on the vehicle could then sense that a collision was imminent. The signal would cause another sensor to determine whether occupant was out of position in seat 12, and could cause the seatbelt to reduce slack and connect occupant to seat. The crash sensor and weight sensor inform the gas generator 26 of a proper inflation rate for airbag 24 according to the weight of occupant 15 and the likely severity of the imminent crash. Gas generator 26 then deploys a mass flow of gas according to this information and provides an appropriate level of inflation of airbag 24 for the occupant 15 and the crash severity.

As mentioned in the background, past systems with rearward-facing seats were related to reversible seating. Due to that, any safety configurations were typically limited and had to be connected to the seat itself for use in forward facing positions or rearward-facing configuration. Additionally, rearward-facing seat configurations result in high forces for occupants in frontal impact collision, forces which are significantly higher than rearward impacts. Past safety solutions for rear impact collisions are not sufficient for frontal impact forces, and are not adaptive to different passengers and/or crash conditions. Thus, there is a need for safety solutions for rearward-facing seat configurations in a frontal impact situation, and particularly for safety solutions which can adapt to the passenger and crash conditions.

The adaptable damping system provides a safety configuration which adjusts to the occupant and/or collision to provide the appropriate safety needed for occupants in rearward-facing seats, even for the high forces of front impact collisions. The placement of airbag 24 at an upper portion of the seat back 18 and in some cases at least partially behind head rest 20 provides protection for occupant 15, and particularly provides protection for the head, neck and brain during a collision. The adaptability allows for the system to provide the proper amount of damping for the situation and occupant, thereby reducing the load on both the occupant and the seat in the event of a collision. The extension of airbag 24 behind headrest 20 can help to stabilize the head rest and therefore the head of the occupant 15. The adaptability additionally allows for the device to adjust for different crash severity and occupant size, thereby providing the appropriate level of damping in various situations.

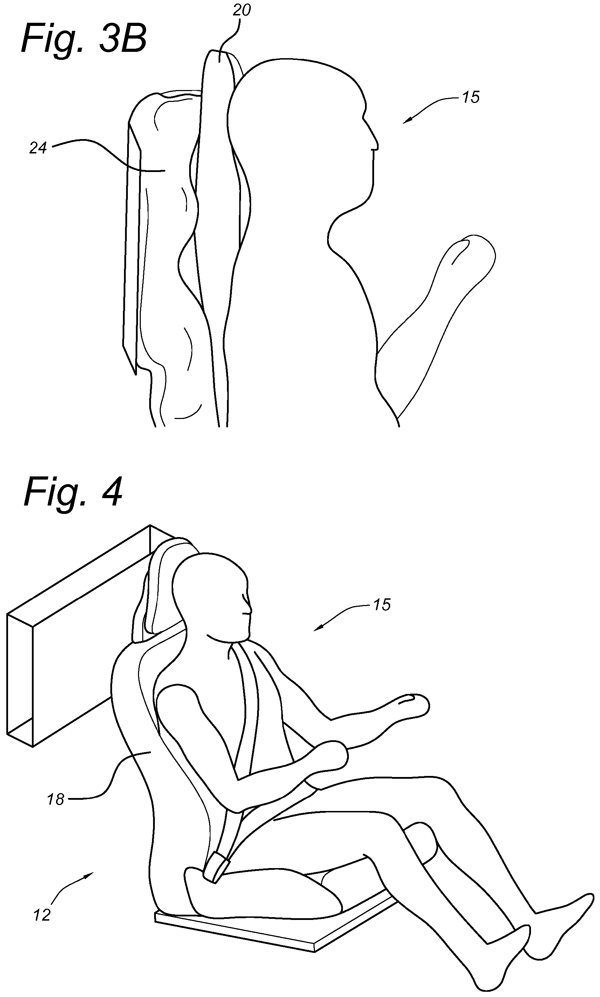

Figure 3A shows a second embodiment, which is according to the invention, of a rearward-facing seat 12 with an adaptive damping device, and Figure 3B shows a cross-sectional side view of part of Fig. 3A. Similar parts are labelled similarly to those in Figs. 2A-2B, and only differences with respect to the embodiment of Figs. 2A-2B will be discussed.

Adaptive damping device includes airbag 24 with adaptive gas generator 26. Airbag 24 extends behind an upper portion of seat back 18 and behind headrest 20 to or nearly to the top of headrest 20. In this configuration, airbag 24 is connected to or within seat 12 (at least in an undeployed state), as can be seen clearly in Fig. 3B. Gas generator 26 is also connected to seat 12.

Such a configuration of adaptive damping device can allow for protection of occupant 15 in the case of a collision or accident as discussed above. Additionally, the connection of airbag 24 (and possibly gas generator 26) to seat 12 directly can ensure that airbag 24 stays properly positioned for inflation and damping even during a crash with strong forces, and can allow for easier manufacture as airbag 24 can be secured to seat 12 and then installed in vehicle 10.

Figure 4 shows a third embodiment, which is not part of the invention, of a rearward-facing seat 12 with adaptive damping device 30. In this embodiment, adaptive damping device 30 is schematically drawn and represents foam material and/or springs used for damping. The foam material could be, for example, crushable foam that does not rebound. Damping device 30 is positioned behind the upper portion of back 18 and headrest 20 of seat 12, and can be secured to the vehicle and/or seat 12.

Damping device 30 can be used in conjunction with the adaptive damping devices shown in Figs. 2A-3B. Damping device 30 using foam and/or springs provides a simple, secure and reliable way of dampening forces on occupant 15 in rearward-facing seat 12 in the event of a collision, and will work to protect an occupant 15 even in the event of a catastrophic failure of other systems, for example, the adaptable airbag system.

An adaptive damping device behind an upper portion of the back of a rearward-facing seat can allow for protection of an occupant even from the severe forces which accompany a frontal collision. Specifically, testing found that the risk of head injury, brain injury and neck injury was reduced, in some cases significantly, through the use of an adaptive damping device as compared to a stiff rearward-facing seat. Such an adaptive damping device provides protection for a variety of occupants in a variety of crash situations.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A rearward-facing seat (12) for a vehicle, the rearward-facing seat (12) comprising:
a base (16);
a back (18); and
an adaptive damping device behind an upper portion of the back of the seat (12), **characterised in that** the adaptive damping device adapts based on one or more of crash severity and occupant size;
wherein the adaptive damping device is connected to an upper portion of the back (18) of the seat (12) behind the seat (12) or wherein the adaptive damping device is located within the seat (12).

2. The rearward-facing seat (12) of claim 1, wherein the adaptive damping device comprises an inflatable airbag (24).

3. The rearward-facing seat (12) of claim 2, wherein the inflatable airbag (24) comprises ventilation holes.

4. The rearward-facing seat (12) of any of the preceding claims, wherein the adaptive damping device is connected to an upper portion of the back (18) of the seat (12) behind the seat (12); and wherein the adaptive damping device is connected to a vehicle (10) structure.

5. The rearward-facing seat (12) of any of the preceding claims, and further comprising a head rest (20) connected to the back (18).

6. The rearward-facing seat (12) of claim 5, wherein the adaptive damping device extends at least partially behind the head rest (20).

7. The rearward-facing seat (12) of claim any of the preceding claims, wherein the adaptive damping device further adapts based on one or more of crash conditions and occupant position.

8. The rearward-facing seat (12) of any of the preceding claims, wherein the back (18) comprises one or more reinforcing components (22).

9. The rearward-facing seat (12) of any of the preceding claims, wherein the adaptive damping device comprises an adaptive gas generator (26) to regulate the mass flow to the damping device.

10. The rearward-facing seat (12) of any of the preceding claims, and further comprising one or more sensors to provide one or more signals for adapting the damping device based on one or more of crash severity, crash conditions, occupant position and occupant size.

11. A vehicle (10) comprising the rearward-facing seat (12) according to any of the preceding claims.

12. A method of safety reinforcement for a rearward-facing seat (12) for a vehicle, the method comprising:
positioning an adaptive damping device behind an upper portion of a back (18) of the rearward-facing seat (12), wherein the adaptive damping device adapts based on one or more of crash severity and occupant size;
wherein the adaptive damping device is connected to an upper portion of the back (18) of the seat (12) behind the seat (12) or wherein the adaptive damping device is located within the seat (12).

13. The method of claim 12, and further comprising:
providing one or more sensors to provide signals for the adaptive damping device to adapt according to one or more of crash severity, crash conditions, occupant position and occupant size.

## Patentansprüche

1. Nach hinten gerichteter Sitz (12) für ein Fahrzeug, wobei der nach hinten gerichtete Sitz (12) Folgendes umfasst:
eine Basis (16);
eine Rückenlehne (18); und
eine adaptive Dämpfungsvorrichtung hinter einem oberen Teil der Rückenlehne des Sitzes (12), **dadurch gekennzeichnet, dass**
sich die adaptive Dämpfungsvorrichtung basierend auf einem oder mehreren von Aufprallschwere und Insassengröße anpasst;
wobei die adaptive Dämpfungsvorrichtung mit einem oberen Abschnitt der Rückenlehne (18) des Sitzes (12) hinter dem Sitz (12) verbunden ist oder wobei sich die adaptive Dämpfungsvorrichtung innerhalb des Sitzes (12) befindet.

2. Nach hinten gerichteter Sitz (12) nach Anspruch 1, wobei die adaptive Dämpfungsvorrichtung einen aufblasbaren Airbag (24) umfasst.

3. Nach hinten gerichteter Sitz (12) nach Anspruch 2, wobei der aufblasbare Airbag (24) Belüftungslöcher umfasst.

4. Nach hinten gerichteter Sitz (12) nach einem der vorhergehenden Ansprüche, wobei die adaptive Dämpfungsvorrichtung mit einem oberen Abschnitt der Rückenlehne (18) des Sitzes (12) hinter dem Sitz (12) verbunden ist; und wobei die adaptive Dämpfungsvorrichtung mit einer Fahrzeugstruktur (10) verbunden ist.

5. Nach hinten gerichteter Sitz (12) nach einem der vorhergehenden Ansprüche, ferner umfassend eine Kopfstütze (20), die mit der Rückenlehne (18) verbunden ist.

6. Nach hinten gerichteter Sitz (12) nach Anspruch 5, wobei sich die adaptive Dämpfungsvorrichtung zumindest teilweise hinter der Kopfstütze (20) erstreckt.

7. Nach hinten gerichteter Sitz (12) nach einem der vorhergehenden Ansprüche, wobei sich die adaptive Dämpfungsvorrichtung ferner basierend auf einem oder mehreren von Aufprallbedingungen und Insassenposition anpasst.

8. Nach hinten gerichteter Sitz (12) nach einem der vorhergehenden Ansprüche, wobei die Rückenlehne (18) eine oder mehrere Verstärkungskomponenten (22) umfasst.

9. Nach hinten gerichteter Sitz (12) nach einem der vorhergehenden Ansprüche, wobei die adaptive Dämpfungsvorrichtung einen adaptiven Gasgenerator (26) umfasst, um den Massenstrom zu der Dämpfungsvorrichtung zu regeln.

10. Nach hinten gerichteter Sitz (12) nach einem der vorhergehenden Ansprüche, ferner umfassend einen oder mehrere Sensoren, um ein oder mehrere Signale zum Anpassen der Dämpfungsvorrichtung basierend auf einem oder mehreren von Aufprallschwere, Aufprallbedingungen, Insassenposition und Insassengröße bereitzustellen.

11. Fahrzeug (10), umfassend den nach hinten gerichteten Sitz (12) nach einem der vorhergehenden Ansprüche.

12. Verfahren zur Sicherheitsverstärkung für einen nach hinten gerichteten Sitz (12) für ein Fahrzeug, wobei das Verfahren Folgendes umfasst:
Positionieren einer adaptiven Dämpfungsvorrichtung hinter einem oberen Abschnitt einer Rückenlehne (18) des nach hinten gerichteten Sitzes (12), wobei sich die adaptive Dämpfungsvorrichtung basierend auf einem oder mehreren von Aufprallschwere und Insassengröße anpasst;
wobei die adaptive Dämpfungsvorrichtung mit einem oberen Abschnitt der Rückenlehne (18) des Sitzes (12) hinter dem Sitz (12) verbunden ist oder wobei sich die adaptive Dämpfungsvorrichtung innerhalb des Sitzes (12) befindet.

13. Verfahren nach Anspruch 12, ferner umfassend:
Bereitstellen eines oder mehrerer Sensoren zum Bereitstellen von Signalen für die adaptive Dämpfungsvorrichtung zum Anpassen gemäß einem oder mehreren von Aufprallschwere, Aufprallbedingungen, Insassenposition und Insassengröße.

## Revendications

1. Siège (12) orienté vers l'arrière pour véhicule, le siège (12) orienté vers l'arrière comprenant :
une base (16) ;
un dossier (18) ; et
dispositif d'amortissement adaptatif derrière une partie supérieure du dossier du siège (12), **caractérisé en ce que**
le dispositif d'amortissement adaptatif s'adapte en fonction de la gravité de l'impact et/ou de la taille de l'occupant ;
le dispositif d'amortissement adaptatif étant relié à une partie supérieure du dossier (18) du siège (12) derrière le siège (12) ou le dispositif d'amortissement adaptatif étant situé à l'intérieur du siège (12).

2. Siège orienté vers l'arrière (12) selon la revendication 1, le dispositif d'amortissement adaptatif comprenant un coussin gonflable (24).

3. Siège orienté vers l'arrière (12) selon la revendication 2, le coussin gonflable (24) comprenant des trous de ventilation.

4. Siège orienté vers l'arrière (12) selon l'une quelconque des revendications précédentes, le dispositif d'amortissement adaptatif étant relié à une partie supérieure du dossier (18) du siège (12) derrière le siège (12) ; et le dispositif d'amortissement adaptatif étant relié à une structure de véhicule (10).

5. Siège orienté vers l'arrière (12) selon l'une quelconque des revendications précédentes, et comprenant en outre un appui-tête (20) relié au dossier (18).

6. Siège orienté vers l'arrière (12) selon la revendication 5, le dispositif d'amortissement adaptatif s'étendant au moins partiellement derrière l'appuie-tête (20).

7. Siège orienté vers l'arrière (12) selon l'une quelconque des revendications précédentes, le dispositif d'amortissement adaptatif s'adaptant en outre en fonction de conditions de l'impact et/ou de la position de l'occupant.

8. Siège orienté vers l'arrière (12) selon l'une quelconque des revendications précédentes, le dossier (18) comprenant un ou plusieurs éléments de renfort (22).

9. Siège orienté vers l'arrière (12) selon l'une quelconque des revendications précédentes, le dispositif d'amortissement adaptatif comprenant un générateur de gaz adaptatif (26) pour réguler le débit massique vers le dispositif d'amortissement.

10. Siège orienté vers l'arrière (12) selon l'une quelconque des revendications précédentes, et comprenant en outre un ou plusieurs capteurs pour fournir un ou plusieurs signaux pour adapter le dispositif d'amortissement en fonction d'une gravité de l'impact, de conditions d'impact, de la position de l'occupant et/ou de la taille de l'occupant.

11. Véhicule (10) comprenant le siège orienté vers l'arrière (12) selon l'une quelconque des revendications précédentes.

12. Procédé de renfort de sécurité pour siège orienté vers l'arrière (12) pour véhicule, le procédé comprenant :
le positionnement d'un dispositif d'amortissement adaptatif derrière une partie supérieure d'un dossier (18) du siège orienté vers l'arrière (12), le dispositif d'amortissement adaptatif s'adaptant en fonction de la gravité de l'impact et/ou de la taille de l'occupant ;
le dispositif d'amortissement adaptatif étant relié à une partie supérieure du dossier (18) du siège (12) derrière le siège (12) ou le dispositif d'amortissement adaptatif étant situé à l'intérieur du siège (12).

13. Procédé selon la revendication 12, et comprenant en outre :
la fourniture d'un ou de plusieurs capteurs destinés à fournir des signaux au dispositif d'amortissement adaptatif afin qu'il s'adapte en fonction de la gravité de l'impact, des conditions de l'impact, de la position de l'occupant et/ou de la taille de l'occupant.
